# EUROPEAN PATENT SPECIFICATION

(11) **EP 3 068 359 B1**
(45) Date of publication and mention of the grant of the patent: **18.12.2019**
(21) Application number: 14821484.4
(22) Date of filing: 18.11.2014
(51) Int. Cl.: A61G 7/002, A61G 7/05

(54) **BED ANGLE INDICATOR**
BETTWINKELGEBER
INDICATEUR D'ANGLE DE LIT

(30) Priority: 15.11.2013 CZ 20130887
(43) Date of publication of application: 21.09.2016
(73) Proprietor: LINET spol. s r.o., 274 01 Slany (CZ)
(72) Inventor: KOLÁR, Tomás, 274 01 Slaný (CZ); ZAJÍCEK, Vladimír, 274 01 Slaný (CZ)
(86) International application number: PCT/CZ2014/000135
(87) International publication number: WO 2015/070830

(56) References cited:
- GB-A- 2 001 174
- US-A- 4 205 665
- US-A- 5 704 130
- US-A1- 2009 320 303
- US-B1- 7 562 458

## Description

### Technical field

This invention is related to an angle indicator of a bed such as a hospital bed, nursing bed, examination bed, stretcher etc. This angle indicator, in the described design involving a liquid angle meter, serves as an indicator of the inclination of a positioning section of a bed to the horizontal plane. The inclinometer includes a light source connected to the control unit, and it can inform the staff of the condition of the bed or the patient.

### Background Art

The use of an inclinometer in the area of hospital beds is a commonly known function. A suitably placed angle indicator, for example in the bed siderail, can fulfil the function of a very useful guide which is easily accessible and which can inform the hospital staff of the tilt of the positioning part of the bed to the horizontal plane. The care of patients with breathing difficulties or heart problems requires the bed to be maintained in the so-called cardiac position. This position requires the bed to be tilted at 30° to horizontal; nevertheless, this may not be obvious for the staff at the first glance.

An inclinometer incorporated in hospital beds need not be principally technically different from the state of the art technology of inclination indicators, and, therefore, a typical representative of regular tilt sensors, such as described in the patent no. US5170567. This electric angle meter is fitted with four electrodes that read the distribution of conductive liquid in a circular angle meter.

Another solution known to have been used in connection with hospital beds is described in the patent no. US4205665, where a special positioning therapy bed is fitted with a liquid tilt indicator with "a bubble" indicating the degree of tilt of a bed. An inclinometer designed in this way, however, is for information only, being not clearly legible and rather obsolete.

Another possible solution how to indicate the angle of tilt of a bed section is the use of an electric tilt sensor connected to a control unit and capable of informing the hospital staff of the state of the bed. Such a solution is described, for instance, in the utility model CN201667114U. However to work properly this mechanism requires connection to a complicated electric circuit and its technical implementation is costly.

Another solution, described in the patent EP2325602, consists in creating a specially shaped recess in the bed siderail, where an indicator moves, indicating the angle of tilt of the positioning section to the horizontal plane. A disadvantage of this solution is the fact that hospital staff must monitor the not very visible indicator, which is almost unnoticeable under poor light condition and from a distance.

A further inclinometer is disclosed in US7562458.

The aim of this invention is to propose a solution of a low-cost, clearly visible tilt indicator that would inform the staff or the patient of the tilt of the positioning section of the bed to the horizontal plane or give information of certain states of the bed, such as reaching a certain (cardiac) position.

### Summary of the invention

The invention is defined by the appended claims.

The above mentioned issues are solved by the indicator of tilt of a bed such as a hospital bed, nursing bed, examination bed etc. which is incorporated in a positioning section of such a bed, for example in the bed siderail, bed board or the patient support. The tilt indicator includes a housing filled by translucent material. This translucent material is according to this invention a coloured liquid, which moves freely inside the housing with every change of tilt of a positioning section of a bed so that the level of the liquid is always horizontal.

A reference system is connected to the housing and contains at least one mark, defining the tilt angle of the positioning section of the bed.

The bed tilt indicator includes a light source which is in advantageous solution connected to the bed control unit to enable changing the light settings. This light source can be realized by LEDs; it can activate, deactivate, and change the colour or intensity of illumination of the tilt indicator according to the user input from the controller.

The control unit changes the light source setting also according to outputs from predefined bed sensors. In an advantageous solution, these sensors can include, for example, a patient support height sensor, a weight sensor, a bed siderail position sensor, a bed accelerometer, an external power supply sensor or a brake sensor.

Alternatively, the control unit can change the light source setting based on the outputs of the monitor of patient's vital functions.

### Brief description of the drawings

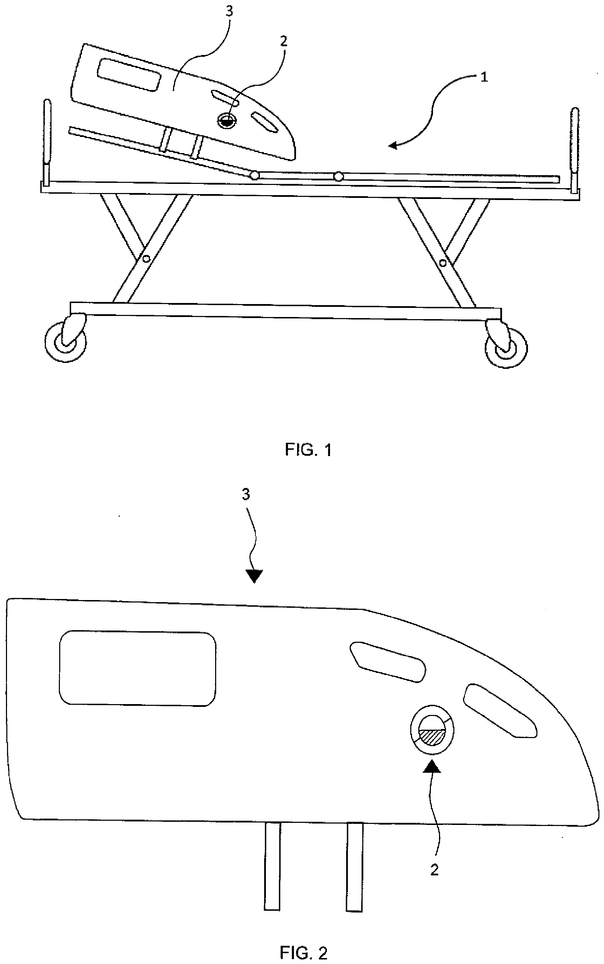

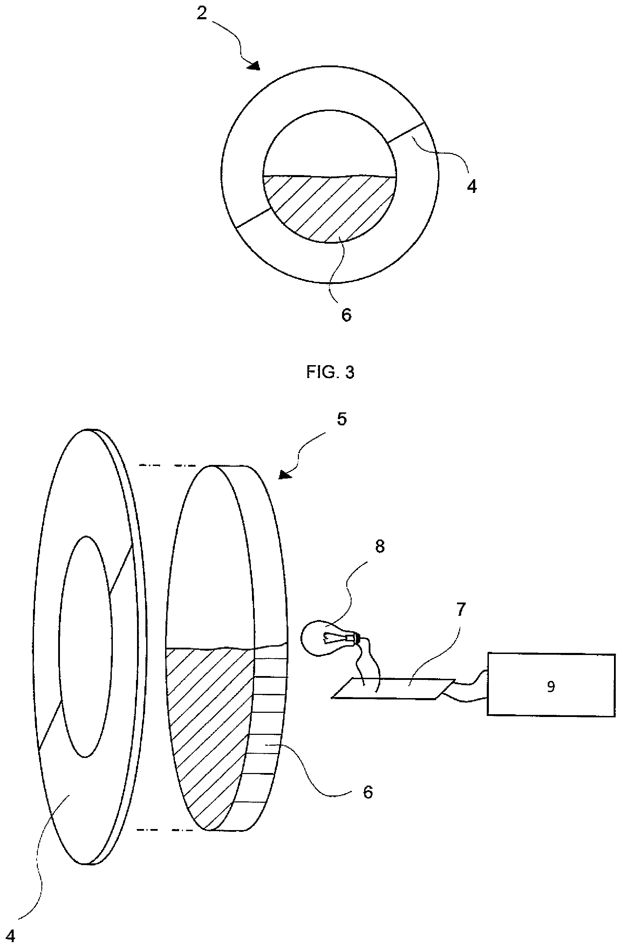

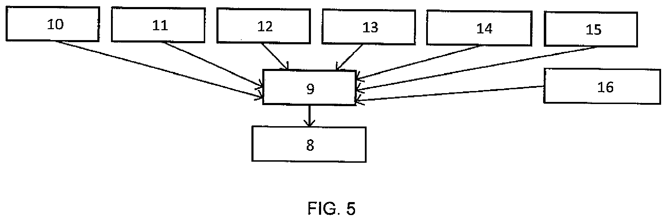

Fig. 1 shows a bed with the tilt indicator integrated in the bed siderail. Fig. 2 shows the bed siderail with the tilt indicator. Fig. 3 shows a front view detail of the tilt indicator. Fig. 4 shows the tilt indicator from the side. Fig. 5 shows a diagram of bed sensors connected to the control unit.

### Detailed description of the drawings

Fig. 1 shows a bed 1 for maintaining a patient in the horizontal position, such as a hospital bed, nursing bed, examination bed, stretcher etc., which has integrated in its siderail 3 the liquid based angle indicator 2 of tilt of the bed 1 according to the present invention. The angle indicator 2 of the bed 1 can be positioned on any positioning section of the bed 1, for example in the bed siderail 3 (Fig. 2), on the frame, on the board or on the patient support of the bed 1, nevertheless, hospital staff most often requires positioning of the back section of the bed 1, and, therefore, it is usually suitably positioned in the siderail 3 of this section of the bed 1. The use of the angle indicator 2 of the bed 1, integrated in a positioning section of the bed 1, provides the staff, or the patient, respectively, with continuous information on the angle of tilt of the positioning section of the bed 1 with this angle indicator 2 of the bed 1 against the horizontal plane. If the staff or the patient tilts the positioning section of the bed 1, they can immediately read the angle of tilt from the cover 4 with the scale located on the angle indicator 2. In an alternative solution, a mark is present on the bed angle indicator 2 and this mark defines a suitable angle of tilt of the given section of the bed 1, defined in advance.

In addition to positioning of the siderails 3 of the bed 1 it is possible to monitor longitudinal tilting of the entire upper frame, which is used when positioning the bed 1 into the Trendelenburg or Antitrendelenburg position. Some versions of upper frames of the bed 1 enable lateral movements of the frame, where the angle indicator 2 indicates tilting of the bed 1 to the side.

Fig. 3 shows a front view detail of the angle indicator 2.

The angle indicator 2 is assembled of circular transparent housing 5 containing the translucent material 6. This material 6, according to the invention, is the coloured translucent liquid 6 for improving visibility; this liquid 6, however, can be colourless as well. Attached to the housing 5, embedded in a circular recess in the bed siderail 3, is the cover 4 with the scale, enabling the staff to read the angle of tilt of the movable section of the bed 1. The cover 4 marks the position in which the head section of the bed 1 is tilted by 30°, i.e. in the so-called cardiac position, as well as by other angles, for example 60° and 90°. It allows the hospital staff to put cardiac patients and patients with breathing difficulties immediately and exactly into this position, crucial for their health condition. In the advantageous solution, any suitable position, e.g. the maximum and minimum tilt, may be marked on the cover 4 with the scale.

The principle of the liquid angle indicator 2 is evident from the figures - the liquid 6 inside the housing 5 of the angle indicator 2 of the bed 1 constantly keeps the level horizontal. When the staff or the patient tilts a section of the bed 1 with the bed siderail 3 where the angle indicator 2 is installed, the housing 5 with the cover 4 tilt along with the siderail 3, and because the level of the liquid 6 does not change it is possible to read from the scale the angle by which the positioning section of the bed 1 tilted.

The housing 5 is made of water-proof material, most commonly of a transparent plastic, and must be designed in such a way that any leak of the liquid 6 from the housing 5 is prevented. The cover 4 with the scale is solved by means of a layer of plastic consisting of two parts. The inside transparent part is made of plastic or glass, to ensure visibility of the level of the translucent material 6. The outside part includes a plastic with a scale, and the entire assembly is translucent. In an alternative solution, the outside part of this layer is transparent and in such a case the scale is marked on the inside translucent part, which is closer to the centre. The cover 4 with the scale can also be solved by means of simple foil stuck onto the transparent housing 5, and this scale can also be transparent. Similarly, a technical solution can be applied in which the scale is situated aside, outside the body of the housing 5 and the angle indicator 2, directly on the siderail 3. The shape of the housing 5, and hence also of the entire angle indicator 2, need not be strictly circular; alternatively, the angle indicator 2 can be of square, rectangular, triangular or any other known shape, provided that it meets the basic conditions for the function of the angle indicator 2. In another alternative solution, the housing 5 is designed in such a way that the liquid 6 inside the housing 5 does not fill the space around the central axis of the circle, and the housing 5 does not form a filled circle but only a circular ring. This solution can ensure higher stability of the liquid 6 and a faster settling of the liquid surface after previous movements, e.g., positioning of the back section of the platform of the bed 1. Also, the density of liquid 6 can be higher than the density of water to ensure higher stability of the liquid 6.

The printed circuit board 7 with the light source 8 connected to the control unit 9 are installed behind the housing 5 to ensure better visibility of the angle indicator 2. The light source 8 can also be installed in a position other than behind the housing 5, but sufficient illumination of the angle indicator 2 must be ensured.

Fig. 4 shows the side view of the angle indicator 2 of the bed 1, including the printed circuit board 7 and the light source 8. Thanks to the fact that the angle indicator 2 can be backlit, it informs the staff of tilting the positioning section of the bed 1 even at low level of light in room. The backlit angle indicator 2 is also very important for checking correct angles of tilt from a distance. Thanks to the entire indication area being large and backlit and the angle indicator 2 including a sufficiently visible scale, hospital staff can read the angle of tilt of the bed 1 from a distance. In this combination, it is necessary that the translucent liquid 6 used is also backlit. The liquid level can be read from a distance as well as its matching to a scale mark. The light source 8 is most commonly designed by means of one or several LEDs. LEDs are available in many colour variations, making it easy to achieve almost any colour backlight. These LEDs are installed on the printed circuit board 7 and are situated behind the housing 5 in such a way that the backlight is evenly distributed throughout the liquid 6. The printed circuit board 7 is connected to the control unit 9. This enables the user to activate, deactivate or to adjust the colour or intensity of backlight as necessary by means of a standard controller which is a common part of electrically controlled hospital beds. The control unit 9 can react by changing the backlight according to defined positions of the bed 1 or according to tilting of the positioning section of the bed 1.

The hospital bed 1 is equipped with extensive electronics, including motors, linear units, sensors and other. These components are usually connected to the main control unit 9 of the hospital bed 1. The control unit 9 issues commands to execute the individual functions and, at the same time, it receives information about their current state or a measured value. From the view of motorized movement of components, the bed 1 is equipped, e.g., with column units ensuring the movement of the entire platform into a required height. Linear units are used to provide the same movement when other lifting means are used, such as of the scissor-lift type. Further linear units are installed in the structure of the upper frame of the bed 1 to ensure movement of the individual sections of the patient support. Furthermore, the hospital bed 1 can be equipped with electronics for controlling the bed 1 movements by means of a driven wheel or for automatic braking of the bed 1 wheels.

In view of sensors there are many types of sensors which are connected to the bed 1. A standard hospital bed 1 is equipped with load cells suitably integrated in the frame of the bed 1, weighing the patient or measuring their movements on the bed 1 as necessary. This can be evaluated by the control unit 9 of the bed 1 as the overall movement activity of the patient, which is an important indicator to indicate the risk of decubitus. Furthermore, the control unit 9, connected to load cells, can evaluate an exact position of the patient. The standard beds 1 are equipped with bed-exit alarms indicating either a hazardous position of the patient, when the patient is too close to the bed edge, or a sudden reduction of weight caused by the patient escaping or leaving the bed.

Other sensors on the bed 1 are designed for indication of safe settings of the individual components. In terms of safety there is usually measured the angle of tilt of the back section of the bed platform, the set height of the bed, locking of the siderails 3 in the upper position, connecting the bed 1 to an external power source and the condition of the wheel brakes of the bed 1.

Additionally to the sensors 10, 11, 12, 13, 14, 15, for monitoring the state of the bed 1 and the position of the patient, the bed 1 can be equipped with sensors measuring patient's vital signs, such as their breathing and heart rate. The status of the sensors as well as the state of the motors and linear units is recorded by the control unit 9. The control unit 9 transmits this information regarding standard hospital beds via the hospital Ethernet to the nurse station, where this information is available to the staff on the monitor. In addition to this, the hospital bed can indicate these states directly at the bed 1, where it signalizes important information to the staff present near the bed 1. This information can be communicated by means of the central indication light 8. This light can indicate various general states of the bed 1, depending on its setting by the producer or hospital staff. The central indication light 8 can indicate, for example, the general safe state, where all selected parameters are in the required state. This safe state can be naturally indicated, for example, by green colour. If the setting or measured value of any component fails to meet a safe state condition, the central indication light 8 turns red. Input parameters for signalization or for a change in signalization can be modified according to a current configuration of the bed 1 by a various combination of the said information transmitted to the control unit 9 of the bed 1. Some examples are described below.

A preferred embodiment includes the angle indicator 2 of the bed 1 which operates as the above described central indication light 8. The angle indicator 2 keeps its primary function since it still indicates the current angle of tilt of the siderail 3 or a movable section of the patient support of the bed 1 to the horizontal position.

In the preferred embodiment, the control unit 9 switch off, adjust the backlight or changes the backlight colour of the angle indicator 2 if the bed 1 reaches the lowest or highest position. In preferred embodiment, the colour or intensity of backlight is adjusted, or the backlight is deactivated, when a pre-defined angle of tilt of the bed 1 is achieved, for example 30°.

Fig. 5 shows the electrical diagram of sensors 10, 11, 12, 13, 14, 15 of the bed 1. The bed can control via the control unit 9 switching off and adjusting the backlight intensity or colour. For example, as soon as the patient support height sensor 10 transmits a signal to the control unit 9 that the bed 1 is in the lowest position, the control unit 9 transmits an instruction to change the colour of the backlight of the angle indicator 2. Hence the patient and the staff are informed, for example, about the lowest position safe for the patient. This instruction can also be transmitted by the control unit 9 based on the signal transmitted by the weight sensor 11, which can be used to evaluate whether the patient has left the bed 1. Switching off, switching on, changing the colour or adjusting the intensity of the backlight of the angle indicator 2 can be changed even when the siderails 3 of the bed 1 are in the lower or upper position, which is evaluated by the control unit 9 based on the signal from the siderail position sensor 12. The accelerometer 13, built directly in the angle indicator 2 or in the siderail 3 of the bed 1, can also transmit signal to the control unit 9. The accelerometer can be set in such a way that when the movable section of the bed 1 is adjusted to predefined angle position to the horizontal plane. The accelerometer transmits a signal for a changing the backlight colour or adjusting intensity via the control unit 9. In another technical solution, the control unit 9 controls switching off or adjusts the backlight intensity or changes the colour based on a signal transmitted by the external power sensor 14 hence the staff and the patient are informed that the bed 1 is connected to power supply. Additionally the control unit 9 informs the staff and the patient if the bed 1 is not braked based on a signal transmitted by the brake sensor 15. The light source 8 can inform about the state of the patient regarding the vital signs monitor 16 concerning patient's vital signs which can be either within the predefined values or in critical values. A critical state can be indicated by the red colour, the state in correct values can be indicated by the green colour.

An ordinary expert skilled in the art can connect the angle indicator 2 directly to a bed sensor without connecting the control unit 9. Regarding the functional principle of the angle indicator 2 it is clear that the angle indicator 2 doesn't have to be connected to any electronics except the illumination and, even so it reliably informs the hospital staff of the angle of tilt of the movable section of the bed 1 referring to the horizontal plane.
- 1: bed
- 2: angle indicator
- 3: siderail
- 4: cover
- 5: housing
- 6: optical conductive material
- 7: printed circuit board
- 8: light source
- 9: control unit
- 10: patient support height sensor
- 11: weight sensor
- 12: siderail position sensor
- 13: accelerometer
- 14: external power supply sensor
- 15: brake sensor
- 16: monitor of vital signs

## Claims

1. A bed (1) with an angle indicator (2), comprising a movable section of the bed (1) and the angle indicator (2) fixed to the movable section of the bed (1) and wherein the angle indicator (2) includes a housing (5) with a free movable translucent material (6) inside the housing (5) for indication of a horizontal plane caused by a gravity force during a change in angle of the movable section of the bed (1), and a light source (8) to illuminate the translucent material, **wherein** the bed (1) further comprises a control unit (9) of the bed (1) and the control unit (9) of the bed (1) is configured to change the light source (8) setting according to outputs from bed sensors or based on the outputs of the monitor of patient's vital functions.

2. The bed (1) with the angle indicator (2) according to claim 1 **wherein** a scale attached to the housing (5) contains at least one mark defining an angle of tilt of movable section of the bed (1).

3. The bed (1) with the angle indicator (2) according to claim 1 **wherein** the angle indicator (2) is attached to a siderail (3) or to a board or a frame or a patient support of the bed (1).

4. The bed (1) with the angle indicator (2) according to claim 1, **wherein** the control unit (9) of the bed (1) based on a signal from at least one bed sensor (10, 11, 12, 13, 14, 15, 16) activates or deactivates the illumination of the angle indicator (2).

5. The bed (1) with the angle indicator (2) according to claim 1, **wherein** the control unit (9) of the bed (1) based on the signal from at least one bed sensor (10, 11, 12, 13, 14, 15, 16) adjusts a colour of the illumination of the translucent material (6).

6. The bed (1) with the angle indicator (2) according to claim 1, **wherein** the control unit (9) of the bed (1) based on the signal from at least one bed sensor (10, 11, 12, 13, 14, 15, 16) adjusts the illumination intensity of the translucent material (6).

7. The bed (1) with the angle indicator (2) according to claim 1, **wherein** the control unit (9) of the bed (1) is connected to at least one of a group of sensors consisting of a patient support height sensor (10), a weight sensor (11), a siderail (3) position sensor (12), an accelerometer (13) in the bed (1), an external power sensor (14), a brake sensor (15), a monitor (16) of vital signs.

8. The bed (1) with the angle indicator (2) according to claim 1, **wherein** the control unit (9) of the bed (1) based on a user input adjusts the illumination.

9. The bed (1) with the angle indicator (2) according to claim 1, **wherein** the translucent material (6) inside the housing (5) is a liquid.

10. The bed (1) with the angle indicator (2) according to claim 1, **wherein** the light source (8) is in the form of an LED.

11. The bed (1) with the angle indicator (2) according to claim 1, **wherein** the translucent material (6) inside the housing (5) is coloured and is a liquid with a higher density than water.

12. The bed (1) with the angle indicator (2) according to claim 1 **wherein** the housing (5) is made from water-proof material and from transparent plastic.

13. The bed (1) with the angle indicator (2) according to claim 1 **wherein** the cover (4) of the housing (5) is made from transparent plastic or glass.

14. The bed (1) with the angle indicator (2) according to claim 1, **wherein** the control unit (9) of the bed (1) based on a user input adjusts the backlight intensity.

## Patentansprüche

1. Bett (1) mit einer Winkelanzeige (2), umfassend einen beweglichen Abschnitt des Betts (1), wobei die Winkelanzeige (2) an dem beweglichen Abschnitt des Betts (1) montiert ist und wobei die Winkelanzeige (2) ein Gehäuse (5) mit einem frei beweglichen transluzenten Material (6) in dem Gehäuse (5) zur Anzeige einer horizontalen Ebene, die durch eine Schwerkraft während einer Änderung des Winkels des beweglichen Abschnitts des Betts (1) verursacht wurde, und eine Lichtquelle (8), um das transluzente Material zu beleuchten, beinhaltet, wobei das Bett (1) ferner eine Steuereinheit (9) des Betts (1) umfasst und die Steuereinheit (9) des Betts (1) dazu ausgelegt ist, die Einstellung der Lichtquelle (8) gemäß Ausgaben von Bettsensoren oder auf Grundlage der Ausgaben des Monitors für die Vitalfunktionen des Patienten zu ändern.

2. Bett (1) mit der Winkelanzeige (2) nach Anspruch 1, wobei eine an dem Gehäuse (5) angebrachte Skala mindestens eine Markierung beinhaltet, die einen Neigungswinkel des beweglichen Abschnitts des Betts (1) definiert.

3. Bett (1) mit der Winkelanzeige (2) nach Anspruch 1, wobei die Winkelanzeige (2) an einer Seitenschiene (3) oder einem Brett oder einem Rahmen oder einer Patientenstütze des Betts (1) angebracht ist.

4. Bett (1) mit der Winkelanzeige (2) nach Anspruch 1, wobei die Steuereinheit (9) des Betts (1) auf Grundlage eines Signals von mindestens einem Bettsensor (10, 11, 12, 13, 14, 15, 16) die Beleuchtung der Winkelanzeige (2) aktiviert oder deaktiviert.

5. Bett (1) mit der Winkelanzeige (2) nach Anspruch 1, wobei die Steuereinheit (9) des Betts (1) auf Grundlage des Signals von mindestens einem Bettsensor (10, 11, 12, 13, 14, 15, 16) eine Farbe der Beleuchtung des transluzenten Materials (6) anpasst.

6. Bett (1) mit der Winkelanzeige (2) nach Anspruch 1, wobei die Steuereinheit (9) des Betts (1) auf Grundlage des Signals von mindestens einem Bettsensor (10, 11, 12, 13, 14, 15, 16) die Beleuchtungsintensität des transluzenten Materials (6) anpasst.

7. Bett (1) mit der Winkelanzeige (2) nach Anspruch 1, wobei die Steuereinheit (9) des Betts (1) mit mindestens einem von einer Gruppe von Sensoren verbunden ist, die aus einem Höhensensor für die Patientenstütze (10), einem Gewichtssensor (11), einem Positionssensor (12) für die Seitenschiene (3), einem Beschleunigungsmesser (13) in dem Bett (1), einem externen Strom Sensor (14), einem Bremssensor (15), einem Vitalparameter-Monitor (16) besteht.

8. Bett (1) mit der Winkelanzeige (2) nach Anspruch 1, wobei die Steuereinheit (9) des Betts (1) auf Grundlage einer Benutzereingabe die Beleuchtung anpasst.

9. Bett (1) mit der Winkelanzeige (2) nach Anspruch 1, wobei das transluzente Material (6) in dem Gehäuse (5) eine Flüssigkeit ist.

10. Bett (1) mit der Winkelanzeige (2) nach Anspruch 1, wobei die Lichtquelle (8) in Form einer LED vorliegt.

11. Bett (1) mit der Winkelanzeige (2) nach Anspruch 1, wobei das transluzente Material (6) in dem Gehäuse farbig (5) ist und eine Flüssigkeit mit einer höheren Dichte als Wasser ist.

12. Bett (1) mit der Winkelanzeige (2) nach Anspruch 1, wobei das Gehäuse (5) aus wasserfestem Material und aus transparentem Kunststoff gefertigt ist.

13. Bett (1) mit der Winkelanzeige (2) nach Anspruch 1, wobei die Abdeckung (4) des Gehäuses (5) aus transparentem Kunststoff oder Glas gefertigt ist.

14. Bett (1) mit der Winkelanzeige (2) nach Anspruch 1, wobei die Steuereinheit (9) des Betts (1) auf Grundlage einer Benutzereingabe die Intensität der Hintergrundbeleuchtung einstellt.

## Revendications

1. Un lit (1) dote d'un indicateur d'angle (2), comprenant une partie amovible du lit (1) et l'indicateur d'angle (2) fixé à la section angulaire du lit (1) et dans lequel l'indicateur d'angle (2) comprend un boîtier (5) avec un matériau translucide mobile libre (6) à l'intérieur dudit boîtier (5) servant à l'indication du plan horizontal provoqué par la force de gravité lors d'une modification de l'angle de la partie amovible du lit (1), et une source lumineuse (8) servant à éclairer le matériau translucide, **où** le lit (1) comprend de plus une unité de commande (9) du lit (1), l'unité de commande (9) du lit (1) étant configurée pour modifier le réglage de la source lumineuse (8) en fonction des sorties des capteurs du lit ou sur la base des sorties du moniteur des fonctions vitales du patient.

2. Le lit (1) avec l'indicateur d'angle (2) conformément à la revendication 1 **dans lequel** une échelle fixée au boîtier (5) contient au moins une marque définissant un angle d'inclinaison de la partie amovible du lit (1).

3. Le lit (1) avec l'indicateur d'angle (2) conformément à la revendication 1 **dans lequel** l'indicateur d'angle (2) est fixé à un rail latéral (3) ou à une plaque ou un cadre ou au support du patient du lit (1).

4. Le lit (1) avec l'indicateur d'angle (2) conformément à la revendication 1 **dans lequel** l'unité de commande (9) du lit (1) active ou désactive, en fonction du signal d'au moins un capteur du lit (10, 11, 12, 13, 14, 15, 16), l'éclairage de l'indicateur d'angle (2).

5. Le lit (1) avec l'indicateur d'angle (2) conformément à la revendication 1 **dans lequel** l'unité de commande (9) du lit (1) ajuste, en fonction du signal d'au moins un capteur du lit (10, 11, 12, 13, 14, 15, 16), la couleur de l'éclairage du matériau translucide (6).

6. Le lit (1) avec l'indicateur d'angle (2) conformément à la revendication 1 **dans lequel** l'unité de commande (9) du lit (1) ajuste, en fonction du signal d'au moins un capteur du lit (10, 11, 12, 13, 14, 15, 16), l'intensité de l'éclairage du matériau translucide (6).

7. Le lit (1) avec l'indicateur d'angle (2) conformément à la revendication 1 **dans lequel** l'unité de commande (9) du lit (1) est connectée à au moins l'un des groupes de capteurs constitué d'un capteur de hauteur du support du patient (10), un capteur de poids (11), un capteur de position (12) du rail latéral (3), un accéléromètre (13) dans le lit (1), un capteur de puissance externe (14), un capteur de frein (15), un moniteur (16) de signes vitaux.

8. Le lit (1) avec l'indicateur d'angle (2) conformément à la revendication 1 **dans lequel** l'unité de commande (9) du lit (1) ajuste l'éclairage en fonction de l'entrée de l'utilisateur.

9. Le lit (1) avec l'indicateur d'angle (2) conformément à la revendication 1 **dans lequel** le matériau translucide (6) est un liquide à l'intérieur du boîtier (5).

10. Le lit (1) avec l'indicateur d'angle (2) conformément à la revendication 1 **dans lequel** la source lumineuse (8) est sous la forme d'une LED.

11. Le lit (1) avec l'indicateur d'angle (2) conformément à la revendication 1 **dans lequel** le matériau translucide (6) à l'intérieur du boîtier (5) est coloré et constitué d'un liquide dont la densité est supérieure à celle de l'eau.

12. Le lit (1) avec l'indicateur d'angle (2) conformément à la revendication 1 **dans lequel** le boîtier (5) est réalisé en matériau imperméable et avec un plastique transparent.

13. Le lit (1) avec l'indicateur d'angle (2) conformément à la revendication 1 **dans lequel** le capot (4) du boîtier (5) est constitué d'un plastique transparent ou de verre.

14. Le lit (1) avec l'indicateur d'angle (2) conformément à la revendication 1 **dans lequel** l'unité de commande (9) du lit (1) ajuste, en fonction de l'entrée de l'utilisateur, l'intensité du rétroéclairage.
